Europäisches Patentamt

European Patent Office

Office européen des brevets

(19)

(11) **EP 1 351 534 A1**

(12) **EUROPEAN PATENT APPLICATION**

(43) Date of publication:
**08.10.2003 Bulletin 2003/41**

(51) Int Cl.⁷: **H04Q 7/36**

(21) Application number: **03252072.8**

(22) Date of filing: **01.04.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **01.04.2002 US 369368 P**

(71) Applicant: **Schema Ltd.**
**Herzlia 46905 (IL)**

(72) Inventors:
• **Abiri, Roni**
**Ra'anana (IL)**
• **Lahav, Shlomo**
**Ramat Gan 52364 (IL)**

• **Shapira, Asaf**
**Tel Aviv 69395 (IL)**
• **Shafran, Gil**
**Jerusalem (IL)**
• **Margolin, Leonid**
**Haifa (IL)**
• **Friydin, Boris**
**Rehovot 76246 (IL)**
• **Zoller, Tal**
**Haifa 34759 (IL)**
• **Moshe-Bahat, Merav**
**Modi'in (IL)**

(74) Representative: **Midgley, Jonathan Lee**
**Marks & Clerk**
**57-60 Lincoln's Inn Fields**
**GB-London WC2A 3LS (GB)**

(54) **Quality-based optimization of cellular network parameters**

(57) A method for configuring a wireless communication network (20) includes receiving input data characterizing a plurality of sectors in the network. Based on the input data, a measure of quality of service in the network is computed as a function of a radio parameter that can be set by an operator of the network in order to determine an operating characteristic of a transmitter serving at least one of the sectors, other than a frequency allocation list of the at least one of the sectors. An optimal setting of the radio parameter is determined responsively to the measure of quality.

**FIG. 3**

EP 1 351 534 A1

**Description**

**FIELD OF THE INVENTION**

The present invention relates generally to planning and optimization of cellular communication networks, and specifically to optimizing the configuration of radio parameters used by base station transceivers in such networks.

**BACKGROUND OF THE INVENTION**

The region served by a cellular communication network is divided into a pattern of cells. Each cell has one or more antennas that communicate with mobile units (cellular telephones and/or data terminals) within its service area. The area served by a given antenna is referred to as a sector. In the context of the present patent application and in the claims, the terms "cell" and "sector" are used interchangeably. Each antenna is connected to a radio transceiver, which transmits cellular signals on assigned frequencies according to certain predefined radio parameters. In Global System for Mobile (GSM) communication networks, for example, the radio parameters define power control behavior, time slot allocation, handover control and frequency hopping modes, *inter alia*.

Each cell in a narrowband cellular network (such as a GSM or Time Division Multiple Access [TDMA] network) is assigned a fixed set of frequencies, also referred to as channels. Because of the limited available spectrum, channel allocation generally involves tradeoffs between coverage of the service area and potential interference between different cells. Various tools have been developed to assist cellular network operators in optimizing frequency distribution among the cells in their service region. For example, U.S. Patent 6,487,414, whose disclosure is incorporated herein by reference, describes a system and method for frequency planning using a mathematical representation of the interference between cells, known as an impact matrix. The impact matrix provides means for predicting the effect of different channel assignments on the signal quality and can be used in finding the optimal frequency allocation.

**SUMMARY OF THE INVENTION**

Embodiments of the present invention provide improved methods for measuring and optimizing the quality of service in a cellular communication network. The quality may be measured, for example, in terms of the expected quality of signals received by mobile stations in different areas the network, based on the probability that a call carried by a given sector will encounter interference greater than a certain level from transmissions in other sectors in the network. Additionally or alternatively, the quality measure may be based on the probability that a frame of data transmitted in the course of the call will be lost (frame erasure) due to interference, or that a call will be dropped due to erasure of multiple frames. Further quality measures may relate to probabilities of network accessibility of handover failure. These quality measures are typically embodied in one or more quality evaluator software programs, which use analytical and/or simulation-based modeling to assess the quality of service that will be afforded by different choices of network parameter settings.

The quality evaluators provided by the present invention may be used in optimizing not only frequency allocation in cellular networks, but also other radio parameter settings, which determine operating characteristics of transmitters serving different sectors in the network. Radio parameters that may be optimized in the manner include:

- Number of transmitter cards used in each sector.
- Stack use - whether to pool all the available time slots on multiple transmitter cards in a given sector for assignment to calls, or to assign the time slots serially, first on one transmitter card and then on the next.
- Channel allocation - whether to assign calls in a given sector first to the slots available on the control channel or first to traffic channel slots, or to assign the calls at random between the control and traffic channels.
- Allocation of time slots to voice or data transmission.
- Choice of frequency hopping type for each sector, and assignment of sectors to different frequency hopping groups.
- Number of frequencies allocated to each sector for purposes of frequency hopping.
- Handover thresholds, defining when a mobile station will be handed over from one sector to another.
- Definition of cell hierarchy for purposes of handover policy.
- Definition of location areas, in which mobile stations must register when moving from area to area.

In cellular networks known in the art, most of these radio parameters are typically set on the basis of estimates of the call traffic to be carried per cell and on general network management considerations. The methods of the present invention, on the other hand, allow these parameters to be set optimally, sector by sector, based on the expected effect of the radio parameter settings on the local and overall quality of service in the network. Although methods of optimization are described herein with respect to certain specific radio parameters, which are characteristic particularly of GSM networks, it will be apparent to those skilled in the art that the methods of the present invention may similarly be applied to optimization of other network parameters, both in GSM networks and in wireless networks of other kinds.

There is therefore provided, in accordance with an embodiment of the present invention, a method for configuring a wireless communication network, including:

receiving input data characterizing a plurality of sectors in the network;
computing, based on the input data, a measure of quality of service in the network as a function of a radio parameter that can be set by an operator of the network in order to determine an operating characteristic of a transmitter serving at least one of the sectors, other than a frequency allocation list of the at least one of the sectors; and
determining an optimal setting of the radio parameter responsively to the measure of quality.

Typically, receiving the input data includes receiving an indication of communication traffic density in each of the sectors. In one embodiment, receiving the indication of the communication traffic density includes receiving the indication with respect to each of a multiplicity of geographical bins in a service region of the network, such that each of at least some of the geographical bins is served by two or more of the sectors. Computing the measure may then include determining one or more respective values of the measure for each of the geographical bins.

Alternatively, computing the measure includes determining one or more respective values of the measure for each of the sectors.

Additionally or alternatively, receiving the input data includes receiving an estimate of interference with radio signals in the at least one of the sectors due to transmissions from others of the sectors in the network. Typically, computing the measure includes computing a carrier/interference (C/I) ratio in the at least one of the sectors based on the estimate of the interference, wherein computing the C/I ratio includes calculating a probability distribution of the C/I ratio. In one embodiment, calculating the probability distribution includes calculating a histogram of probabilities that is indicative of the C/I ratio due to the interference from two or more of the others of the sectors.

Further additionally or alternatively, computing the measure includes computing an impact matrix, including matrix entries that are indicative of a probability of loss of transmitted information due to the interference between pairs of sectors in the network.

In embodiments of the invention, computing the measure includes computing at least one of a received signal quality indicator, a bit error rate and a frame erasure rate based on the input data and on a setting of the radio parameter. In another embodiment, computing the measure includes computing a probability of dropping a call made to or from a mobile unit in the at least one of the sectors. In yet another embodiment, computing the measure includes computing at least one of an indication of accessibility of the network and a probability of a handover failure in the network.

In an aspect of the invention, the radio parameter includes at least one of a TRX size indicating a number of transmitter cards to be used in the at least one of the sectors and a stack use parameter indicating an order of use of the transmitter cards. In another aspect, the radio parameter is indicative of at least one of a channel allocation policy for allocating calls to a control channel or a traffic channel in the at least one of the sectors and a slot allocation policy for allocating time slots to the calls. In yet another aspect, the radio parameter includes a handover parameter for controlling a handover of a mobile unit between the sectors. In a further aspect of the invention, the radio parameter is indicative of at least one of a type of frequency hopping implemented by the transmitter, a hopping serial number (HSN) used in controlling the frequency hopping, and a mobile allocation index offset (MAIO).

The method may further include determining a number of frequency channels to include in the frequency allocation list based on the measure.

There is also provided, in accordance with an embodiment of the present invention, a method for configuring a wireless communication network, including:

receiving input data characterizing a plurality of sectors in the network, the input data including an indication of communication traffic density in each of the sectors and an estimate of interference among the sectors;
computing, based on the input data, for each sector among the plurality of the sectors, a probability distribution of a carrier/interference (C/I) ratio of calls to and from mobile units served by the sector due to the interference from other sectors among the plurality of the sectors;
determining a measure of quality of service in the network as a function of the probability distribution; and
setting one or more radio parameters of the network responsively to the measure of quality.

In an embodiment of the invention, receiving the input data includes receiving at least some of the input data with respect to each of a multiplicity of geographical bins in a service region of the network, such that each of at least some of the geographical bins is served by two or more of the sectors, and computing the probability distribution includes determining respective values of the probability distribution for each of the geographical bins. Typically, receiving the at least some of the input data includes determining, for each of the geographical bins, a respective probability that each of the two or more of the sectors will serve each of the at least some of the geographical bins.

Computing the probability distribution may include calculating a histogram of probabilities. In one embodiment, calculating the histogram of probabilities includes determining at least first and second basic histograms that are indicative of the interference from first and second sectors, respectively, among the other sectors, that transmit interfering signals on a given frequency, and combining the basic histograms to determine a combined histogram of probabilities defining the probability distribution of the C/I ratio for the given frequency. Typically, calculating the histogram of probabilities includes determining respective combined histograms for each of a multiplicity of frequencies transmitted by each of the sectors, and taking a weighted average of the combined histograms.

Typically, computing the probability distribution includes calculating the probability distribution based on a probability of transmission by each of the sectors on each of a plurality of frequency channels. In an aspect of the invention, calculating the probability distribution includes determining the probability of transmission for each of the frequency channels depending on whether each of the frequency channels is allocated as a control channel or a traffic channel and based on a channel allocation policy for allocating calls among the frequency channels. Additionally or alternatively, calculating the probability distribution includes determining the probability of transmission depending on a type of frequency hopping used in each of the sectors.

In an embodiment of the invention, in which at least some of the sectors are characterized by frequency hopping, computing the probability distribution includes determining, for each sector among the at least some of the sectors, a first probability of interference due to interfering transmissions by transmitters within a frequency hopping group to which the sector belongs and a second probability of interference due to the transmitters outside the frequency hopping group, and combining the first probability and the second probability to find the probability distribution.

Determining the measure may include computing at least one of a received signal quality indicator, a bit error rate, a frame erasure rate and a drop-call probability based on the probability distribution. Setting the one or more radio parameters typically includes allocating a respective set of frequencies to each of the sectors. Additionally or alternatively, setting the one or more radio parameters includes setting at least one of a TRX size, a stack use parameter, a channel allocation policy, a slot allocation policy, a handover parameter, a frequency hopping type, a hopping serial number (HSN) and a mobile allocation index offset (MAIO).

There is additionally provided, in accordance with an embodiment of the present invention, a method for configuring a wireless communication network, including:

receiving input information characterizing a plurality of sectors in the network, the input data including an indication of communication traffic density in each of the sectors and an estimate of interference among the sectors;

computing, based on the input information, for each sector among the plurality of the sectors, a drop-call probability that calls to and from mobile units served by the sector will be dropped due to the interference from other sectors among the plurality of the sectors; and

setting one or more radio parameters of the network responsively to the drop-call probability.

In one embodiment, computing the drop-call probability includes estimating a frame-loss probability of losing a frame of data during the calls due to the interference, and calculating the drop-call probability based on the frame-loss probability. Calculating the drop-call probability may include defining a Markov chain having a transition matrix including matrix elements determined by the frame-loss probability, and raising the transition matrix to a selected power.

There is further provided, in accordance with an embodiment of the present invention, a method for configuring a wireless communication network, including:

receiving input data characterizing a plurality of sectors in the network;

computing, based on the input data, a measure of quality of service in the network as a function of a frequency hopping characteristic of a transmitter serving at least one of the sectors; and

setting the frequency hopping characteristic of the transmitter responsively to the measure of quality.

Typically, the frequency hopping characteristic includes at least one of a hopping type, a hopping serial number (HSN) and a mobile allocation index offset (MAIO). Additionally or alternatively, the transmitter includes one or more transmitter cards, and setting the frequency hopping characteristic includes determining a number of frequencies in a mobile allocation list (MAL) of the transmitter over which the transmitter cards are to hop.

There is moreover provided, in accordance with an embodiment of the present invention, apparatus for configuring a wireless communication network, including an optimization workstation, which is adapted to receive input data characterizing a plurality of sectors in the network, and to compute, based on the input data, a measure of quality of service in the network as a function of a radio parameter that can be set by an operator of the network in order to determine an operating characteristic of a transmitter serving at least one of the sectors, other than a frequency allocation list of the at least one of the sectors, so as to determine an optimal setting of the radio parameter responsively to the measure of quality.

There is furthermore provided, in accordance with an embodiment of the present invention, apparatus for configuring a wireless communication network, including an optimization workstation, which is adapted to receive input data characterizing a plurality of sectors in the network, the input data including an indication of communication traffic density in each of the sectors and an estimate of interference among the sectors, and to compute based on the input data, for each sector among the plurality of the sectors, a probability distribution of a carrier/interference (C/I) ratio of calls to and from mobile units served by the sector due to the interference from other sectors among the plurality of the sectors, so as to determine a measure of quality of service in the network as a function of the probability distribution, for use in setting one or more radio parameters of the network responsively to the measure of quality.

There is also provided, in accordance with an embodiment of the present invention, apparatus for configuring a wireless communication network, including an optimization workstation, which is adapted to receive input information characterizing a plurality of sectors in the network, the input data including an indication of communication traffic density in each of the sectors and an estimate of interference among the sectors, and to compute, based on the input information, for each sector among the plurality of the sectors, a drop-call probability that calls to and from mobile units served by the sector will be dropped due to the interference from other sectors among the plurality of the sectors, for use in setting one or more radio parameters of the network responsively to the drop-call probability.

There is additionally provided, in accordance with an embodiment of the present invention, apparatus for configuring a wireless communication network, including an optimization workstation, which is adapted to receive input data characterizing a plurality of sectors in the network, and to compute, based on the input data, a measure of quality of service in the network as a function of a frequency hopping characteristic of a transmitter serving at least one of the sectors, for use in setting the frequency hopping characteristic of the transmitter responsively to the measure of quality.

There is further provided, in accordance with an embodiment of the present invention, a computer software product for use in configuring a wireless communication network, the product including a computer-readable medium in which program instructions are stored, which instructions, when read by a computer, cause the computer to receive input data characterizing a plurality of sectors in the network, and to compute, based on the input data, a measure of quality of service in the network as a function of a radio parameter that can be set by an operator of the network in order to determine an operating characteristic of a transmitter serving at least one of the sectors, other than a frequency allocation list of the at least one of the sectors, so as to determine an optimal setting of the radio parameter responsively to the measure of quality.

There is moreover provided, in accordance with an embodiment of the present invention, a computer software product for use in configuring a wireless communication network, the product including a computer-readable medium in which program instructions are stored, which instructions, when read by a computer, cause the computer to receive input data characterizing a plurality of sectors in the network, the input data including an indication of communication traffic density in each of the sectors and an estimate of interference among the sectors, and to compute based on the input data, for each sector among the plurality of the sectors, a probability distribution of a carrier/interference (C/I) ratio of calls to and from mobile units served by the sector due to the interference from other sectors among the plurality of the sectors, so as to determine a measure of quality of service in the network as a function of the probability distribution, for use in setting one or more radio parameters of the network responsively to the measure of quality.

There is furthermore provided, in accordance with an embodiment of the present invention, a computer software product for use in configuring a wireless communication network, the product including a computer-readable medium in which program instructions are stored, which instructions, when read by a computer, cause the computer to receive input information characterizing a plurality of sectors in the network, the input data including an indication of communication traffic density in each of the sectors and an estimate of interference among the sectors, and to compute, based on the input information, for each sector among the plurality of the sectors, a drop-call probability that calls to and from mobile units served by the sector will be dropped due to the interference from other sectors among the plurality of the sectors, for use in setting one or more radio parameters of the network responsively to the drop-call probability.

There is also provided, in accordance with an embodiment of the present invention, a computer software product for use in configuring a wireless communication network, the product including a computer-readable medium in which program instructions are stored, which instructions, when read by a computer, cause the computer to receive input data characterizing a plurality of sectors in the network, and to compute, based on the input data, a measure of quality of service in the network as a function of a frequency hopping characteristic of a transmitter serving at least one of the sectors, for use in setting the frequency hopping characteristic of the transmitter responsively to the measure of quality.

The present invention will be more fully understood from the following detailed description of the embodiments thereof, taken together with the drawings in which:

## BRIEF DESCRIPTION OF THE DRAWINGS

Fig. 1 is a schematic, pictorial illustration of a cellular communication network, which is optimized in accordance with an embodiment of the present invention;

Fig. 2 is a block diagram that schematically illustrates transmitter hardware used in a cellular base station in the network of Fig. 1;

Fig. 3 is a block diagram that schematically shows details of a system for network optimization, in accordance with an embodiment of the present invention;

Fig. 4 is a flow chart that schematically illustrates a method for network quality evaluation, in accordance with an embodiment of the present invention;

Fig. 5 is a flow chart that schematically illustrates a method for network quality evaluation, in accordance with another embodiment of the present invention;

Fig. 6 is a flow chart that schematically illustrates a method for network quality evaluation, in accordance with still another embodiment of the present invention; and

Fig. 7 is a plot that schematically illustrates a dependence of dropped-call probability on frame erasure probability, computed in accordance with an embodiment of the present invention.

## DETAILED DESCRIPTION OF EMBODIMENTS

SYSTEM OVERVIEW

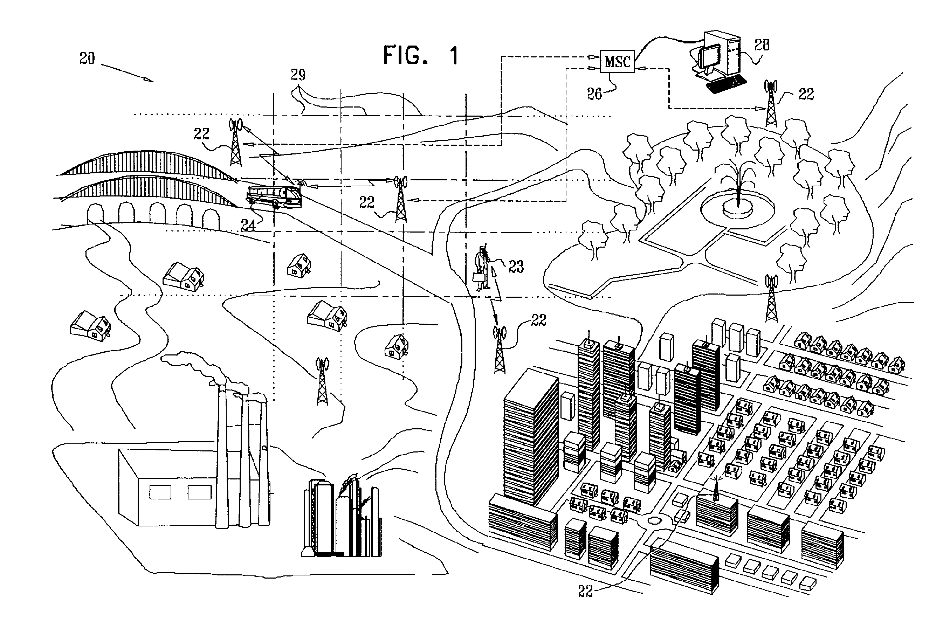

Fig. 1 is a schematic, pictorial view of a cellular communication network 20, in which network parameters are determined in accordance with an embodiment of the present invention. In the present embodiment, network 20 is assumed to be a GSM network, and the operation of the network is described hereinbelow using GSM terminology. The service region of network 20 is divided into partly-overlapping cells, each comprising one or more sectors, which are served by respective fixed transceivers 22 (represented as antennas in Fig. 1). Each transceiver serves mobile stations, such as a cellular telephone 23, within the cell service area. Other mobile stations may be data stations (not shown in the figure), which typically operate according to General Packet Radio Service (GPRS) standards.

Each transceiver 22 is assigned a set of one or more frequencies, or channels, for use in serving mobile stations in its service area. Every sector has one base station control channel (BCCH), and may also have one or more traffic channels (TCH). For each call that a given transceiver is required to serve, the transceiver assigns a time slot on either its control channel or one of its traffic channels. The assignment of channels and time slots to voice and data calls is controlled in accordance with preset radio parameters, which are set for each sector by the operator of network 20.

In the course of a telephone call, particularly while traveling, such as in a vehicle 24, a mobile unit may be handed over from one cell to another. Communication traffic in cellular network 20 is controlled and routed among transceivers 22 by a mobile switching center (MSC) 26, as is known in the art. The handover generally takes place when the strength of the communication signals received from a mobile unit by its current serving cell drops below the strength of the signals received from the mobile unit by some other cell (typically a neighboring cell) by a preset margin. The mobile unit is then handed over to the neighboring cell, which becomes the new serving cell for the mobile unit. The handover takes place in accordance with policies, including the preset margin at which handover is to occur, that are set by the network operator. Typically, either the MSC or a base station controller (BSC - not shown) is responsible for controlling and tracking handovers of mobile units within the cellular network.

An optimization workstation 28 is used for determining the optimal allocation of frequencies among the cells in network 20, as well as the optimal settings of other radio parameters used by transceivers 22. For this purpose, workstation 28 receives input information regarding network 20, such as measurements and/or estimates of signal levels and communication traffic density (referred to hereinbelow simply as the traffic). The information may be provided on a cell-by-cell or sector-by-sector basis, via MSC 26, for example. Alternatively or additionally, measurements of signal strength and estimates of network traffic may be made by dividing the service region of network 20 into bins 29, each comprising a small geographical area, preferably much smaller than the size of a cell. Typically, any given bin may belong to the service areas of multiple cells. Exemplary methods for estimating traffic distribution are described, for example, in U.S. Patent Application 10/214,852, entitled, "Estimating Traffic Distribution in a Mobile Communication Network," filed August 7, 2002. Signal strengths may be estimated a *priori* and/or derived from drive test measurements, as described, for example, in another U.S. patent application entitled, "Classification of Cellular Network Drive Test Results," filed March 18, 2003. Both of these applications are assigned to the assignee of the present patent application, and their disclosures are incorporated herein by reference.

Workstation 28 typically comprises a general-purpose computer, which determines the optimal frequency allocation and radio parameter settings under the control of software supplied for this purpose. The software may be conveyed to the computer in electronic form, over a network, for example, or it may be furnished on tangible media, such as CD-ROM.

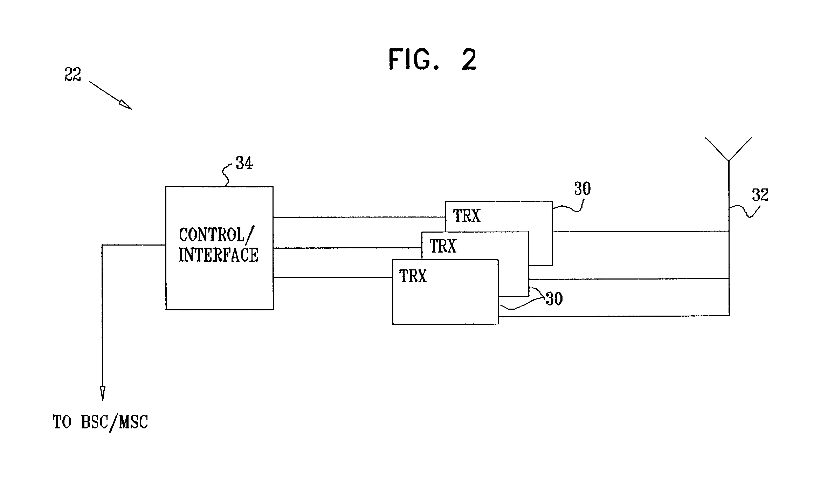

Fig. 2 is a block diagram that schematically shows details of transceiver 22 involved in downlink transmission, as an aid in understanding the optimization functions performed by workstation 28. The transceiver comprises one or more transmitter cards (TRX) 30, which are connected to transmit radio signals to mobile units in a given sector via an antenna 32. The broadcast control channel (BCCH) is assigned to one TRX, known as the BCCH TRX, while the other transmitter cards transmit mainly traffic channels (TCH) and are known as TCH TRXs. The BCCH is transmitted at all times, at full transmission power, while the TCHs are transmitted when required to serve traffic in the sector, and may be subject to transmission power control. The allocation of frequencies, the number of TRX cards in each transceiver, and other radio parameters and policies are preferably determined by workstation 28, based on call quality considerations, as described hereinbelow. A controller 34 interfaces between TRX cards 30 and the cellular network and can be used to set the radio parameters and policies used by the TRX cards, such as slot and channel allocation policies, TRX stack uses, frequency hopping parameters and handover parameters.

Transceiver 22 likewise comprises receiver circuitry (not shown in the figures), as is know in the art, for receiving uplink transmission from mobile units in network 20. Although methods for optimization of network parameters are described herein with particular reference to downlink transmission functions, the principles of the present invention may similarly be applied in optimization of uplink transmission functions, as well.

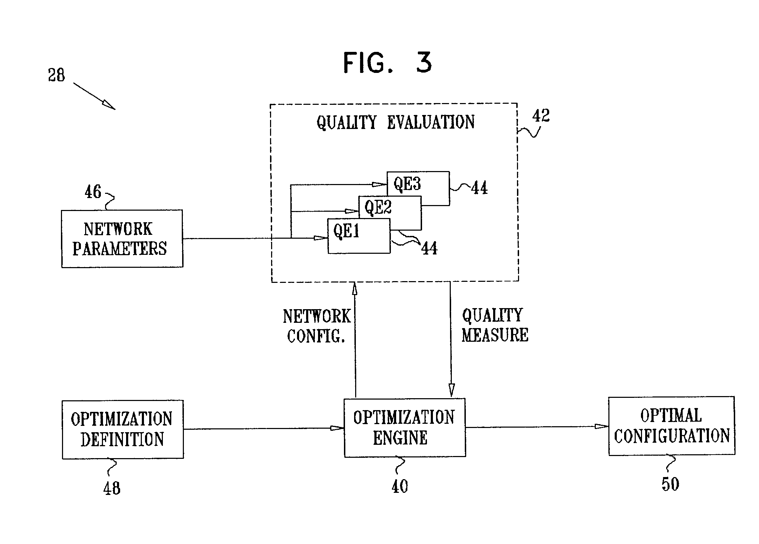

Fig. 3 is a block diagram that schematically illustrates functional elements of workstation 28 used in optimizing network parameters, in accordance with an embodiment of the present invention. The division of the workstation into the functional blocks illustrated in Fig. 3 is shown for conceptual clarity, and does not necessarily correspond to any particular hardware configuration of the workstation. These functional blocks may simply correspond to different software modules that run on the workstation CPU. Alternatively, different functional blocks may run on different computer processors, which communicate with one another via a suitable computer network or other communication link. Furthermore, some of the blocks may require operations by and/or interactions with a user of workstation 28.

Workstation 28 typically comprises an optimization engine 40, which determines an optimal setting of network parameters based on quality measures received from a quality evaluation module 42. Engine 40 inputs different possible network configurations - such as possible frequency allocations among the cells of network 20 or settings of radio parameters in the different cells - to module 42, and receives back from module 42 one or more quality measures, or scores, for each possible configuration. Engine 40 uses the quality measures in optimizing the network configuration, i.e., choosing the frequency allocation and radio parameters that will give the best possible network quality.

Optimization engine 40 may comprise any suitable type of optimization engine known in the art. For example, a genetic algorithm may be used to find an optimal frequency allocation and radio parameters. The use of genetic algorithms in solving optimization problems is described, for instance, by Michalewicz in *Genetic Algorithms + Data Structures = Evolution Programs* (Springer, Berlin, 1996), and by Goldberg in *The Design of Innovation: Lessons from and for Competent Genetic Algorithms* (Kluwer, Boston, 2002). Both of these publications are incorporated herein by reference. Briefly, in order to optimize the frequency allocation and radio parameters in network 20, each transceiver 22 is represented by a group of "genes" corresponding, directly or indirectly, to the transmission frequencies and other radio parameters to be optimized. For each "genotype" used by engine 40 in the optimization (i.e., the set of genes representing all the transceivers), quality evaluation module 42 calculates a quality measure, based on the frequency allocation and radio parameters corresponding to the genotype. The genetic algorithm reproduces and "splices" the genes, based on the quality measures of the different genotypes, until an optimal solution is found. Heuristic procedures may be used to reduce the range of genes so that the algorithm converges more quickly to a desired solution.

Alternatively or additionally, engine 40 may implement other optimization methods known in the art, such as probabilistic algorithms, including neural nets and simulated annealing methods, as well as local search ("greedy") methods and various heuristics, either by themselves or in combination with probabilistic methods. Further alternatively or additionally, some of the functions of optimization engine 40 may be performed by a human operator of workstation 28, who inputs different network configuration parameters to module 42 and then observes the resultant quality measures in order to optimize certain features of the network configuration.

Quality evaluation module 42 comprises one or more quality evaluators 44, typically several such evaluators. Each quality evaluator comprises a software program module, each of which computes a respective quality measure. Evaluators 44 may be based on analytical modeling of network 20, or on numerical simulation of the network, or on a combination of analytical and simulation-based models. Typically, some of the quality evaluators are designed for rough, high-speed quality estimation, while others are more computation-intensive, and provide more precise quality measures (which may also take into account interdependencies of different variables that affect communication quality). Additionally or alternatively, some quality evaluators may have a granularity parameter that may be adjusted to select either higher speed or higher precision in calculation of quality measures. A number of exemplary quality evaluators are described hereinbelow.

For any given optimization problem undertaken by workstation 28, optimization engine 40 selects the appropriate quality evaluation options, such as which of quality evaluators 44 to use and how to set the granularity parameters, when available. The choice of quality evaluation options may be made automatically by engine 40, or the options may be set by a user of workstation 28. In some cases, it may be desirable to use a rough, high-speed quality evaluation in the initial stages of an optimization problem, followed by a more precise, computation-intensive quality evaluation as the optimization converges to a solution. Additionally or alternatively, for rapid quality evaluation in the initial stages, quality evaluation module 42 may apply landmark sampling, to calculate the quality measures using evaluators 44 only for a limited number of parameter choices, distributed over the parameter space of interest. Module 42 then finds approximate quality measures for the remaining parameter choices within the range by interpolation.

Quality evaluation module 42 evaluates the quality of each proposed network configuration based on network parameters 46 that are input to workstation 28. As noted above, these parameters generally include actual and/or model data regarding network traffic and signal strengths in different sectors of network 20 or different geographical bins 29. In addition, parameters 46 typically include radio parameter settings, which influence the computation of quality measures by evaluators 44, as described below. The signal strength parameters are typically used in computing the impact matrix, as described in the above-mentioned U.S. Patent 6,487,414, which is applied by at least some of quality evaluators 44 in calculating the quality measures associated with different frequency allocations and radio parameter settings.

Workstation 28 may be used to optimize simultaneously both the frequency allocations in network 20 and all of the adjustable radio parameters of transceivers 22. Frequently, however, only a subset of these features is selected for processing in each optimization run. The choice of parameters to be optimized and the ranges over which these parameters are allowed to vary are input by a user of the workstation in an optimization definition 48. Optimization engine 40 runs its optimization algorithm over these parameters and ranges, using the quality measures provided by quality evaluation module 42. The optimization engine may run through a number of iterations, which may use different quality evaluators or granularity parameters. It then outputs an optimal configuration 50 for implementation in network 20.

As noted above, workstation 28 may be used to optimize substantially any network parameter or set of network parameters that influence the quality of service on the network in a measurable way. These parameters may, in general, be optimized and set in network 20 on a sector-by-sector basis. The setting of a given parameter in one sector, however, may influence the quality of network service in other sectors. Quality evaluators 44 take into account these mutual effects among different sectors, as described below. A number of the parameters that may be optimized by workstation 28 are listed below by way of example, and not limitation, using the vocabulary of GSM networks for the sake of clarity and convenience:

- Mobile Allocation List (MAL) - the list of frequencies allocated to each sector.
- TRX size - radio hardware capacity of each sector, i.e., the number of TRX cards 30 installed in each transceiver 22. Typically, in a GSM network, each frequency channel (except the BCCH) has eight time slots available for call traffic, and each TRX card is capable of supporting eight time slots. Quality considerations, however, may indicate that the number of TRX cards used in a given transceiver should be greater than the number of frequencies in the MAL.
- Stack use - defines whether in assigning time slots to calls, the transceiver fills all the time slots on one TRX first, before beginning to assign the time slots on the next TRX, or whether the time slots are treated as a single pool and assigned to calls at random.
- Channel type priority (sometimes referred to as channel allocation policy - CHALLOC) - defines whether in assigning time slots to calls, the transceiver first fills the available slots on the control channel (BCCH), or first fills the available slots on its traffic channels (TCH), or assigns the slots at random, without priority to BCCH or TCH. This policy affects the carrier/interference (C/I) ratio both of the sector in which the CHALLOC is set and of neighboring sectors.
- Slot allocation policy - allocation of time slots to voice or to data traffic (packet data channels - PDCH). Optimizing the slot allocation policy can improve the quality of service, particularly in sectors populated by many data application users. In this regard, it is also possible to optimize the packet channel allocation priority, which determines whether a packet call is assigned to PDCH timeslots on the BCCH TRX or on a TCH TRX.
- Handover parameters - define when a mobile station will be handed over from one cell to another, depending on relative signal strengths in neighboring sectors. Different, sector-by-sector handover parameter settings can be adjusted both to deal with network traffic distribution and quality considerations. The cell hierarchy for purposes of handovers may also be optimized.
- Location areas - define when a mobile station must register a new location, when moving from one area to another.
- Hopping type - determines whether the transceiver will use fixed frequencies (no hopping) to handle calls, or will perform baseband hopping or synthesized hopping. Hopping is used in GSM networks to reduce the probability of frame errors and dropped calls due to interference on a given frequency, as well as reducing the data block error ratio (BLER) in data packet calls. When no hopping is used, so that each call is assigned a fixed frequency, calls on frequencies that are relatively noisy, due to interference or fading, are likely to be dropped. When hopping is used, on the other hand, all the calls on the traffic channels (TCH) in a given sector hop over all the TCH frequencies in a pseudo-random pattern. Therefore, each call uses the noisier frequencies only intermittently, so that the noise is averaged over all the calls, and the likelihood of dropped calls decreases. In baseband hopping, each TRX card transmits on a fixed frequency, and the traffic channels "hop" from card to card (i.e., each successive frame of each call is handled by a different card). In synthesized hopping, each call is assigned to one particular TRX card, and the frequency transmitted by each card varies. There is no frequency hopping on the BCCH in any case.

- Hopping Sequence Number (HSN) and Mobile Allocation Index Offset (MAIO) - HSN defines the sequential order of frequencies over which all the TCH TRX cards in a given sector are to hop. HSN has a value between 0 and 63, corresponding to 64 different hopping sequences that may be assigned to each sector. MAIO determines the starting point in the hopping sequence for each TRX card. The MAIO setting for each card in a given sector is different, so that no two cards in the same sector transmit on the same frequency at the same time. The effect of HSN and hopping mode on mutual interference between different sectors (and hence on the quality measures computed by module 42) is described in detail hereinbelow. Methods for optimization of HSN and hopping mode based on quality considerations are also described.

## QUALITY EVALUATION BY SECTORS AND BY GEOGRAPHICAL BINS

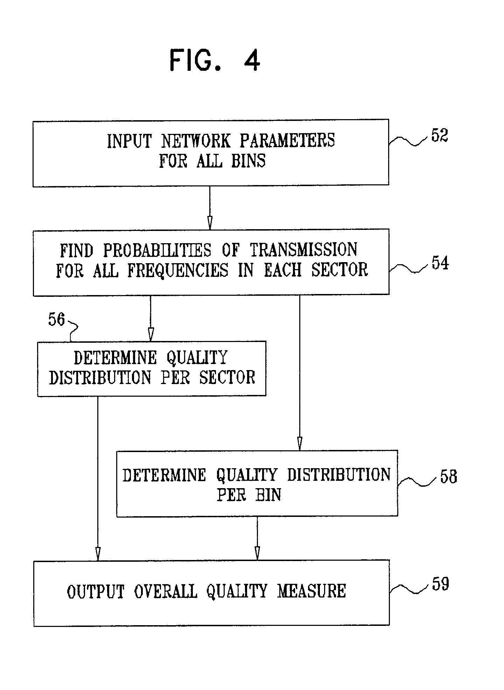

Fig. 4 is a flow chart that schematically illustrates a method used by one of quality evaluators 44 in determining a quality measure for output to optimization engine 40, in accordance with an embodiment of the present invention. This method assumes that there are $N+1$ quality levels $\{0, ..., N\}$, wherein 0 corresponds to "perfect" quality, and $N$ denotes the worst quality level. These levels may correspond, for example, to the RXQUAL factor that is used to indicate signal quality in GSM networks, or alternatively to other factors, such as C/I ratio, bit error rate (BER) or frame erasure rate (FER). Evaluator 44 calculates a quality probability histogram for each frequency in each sector or in each geographical bin 29. In other words, the quality evaluator calculates for each sector or bin and for each frequency allocated to each sector, and for each possible quality level, the probability that a randomly-chosen call at a random time will have this particular quality level.

The method uses the following notation:

- $\Theta_T^f$ denotes the event that a specific call in sector T in a specific time slot (TS) uses frequency $f$.
- $T_T^f$ denotes the event that in sector $T$ in a specific TS, frequency $f$ is transmitted (traffic or control channel).
- $U_T^f$ denotes the event that in sector $T$ in a specific TS, frequency $f$ is used to transmit a call (traffic channel only).
- $F(T)$ denotes the set of all frequencies allocated to sector $T$.
- $N(T)$ denotes the set of all sectors that may interfere with sector $T$ (neighborhood of sector $T$).
- $Q_T$ denotes the quality level of a specific call in a specific TS.

Evaluator 44 calculates the quality probabilities on the basis of network parameters 46, which it receives at a parameter input step 52. In the present example, using the GSM network parameters described above, the input parameters include the following data for each sector:

- Traffic level (traffic).
- Number of TRXs (TRX).
- Number of TCHs (TCH).
- Hopping type (baseband, synthesized or non-hopping).
- Channel allocation priority (CHALLOC parameter: 0 - no priority; 1 - BCCH has priority; 2 - TCHs have priority).

As noted above, the quality probabilities may be calculated for each sector or (with finer granularity, if suitable data are available) for each bin 29. In the latter case, for each geographical bin $p$ evaluator 44 receives the following input data:

- The set of sectors $N(p)$ from which signals are received in bin $p$.
- The received power $R_T(p)$ in bin $p$ from each sector $T \in N(p)$.
- For each sector $T \in N(p)$, the probability of serving a mobile station in bin $p$, $P\{\Phi_T(p)\}$, wherein $\Phi_T(p)$ denotes the event "sector T serves bin $p$."

Methods for determining $R_T(p)$ based on drive test results are described in the above-mentioned patent application entitled "Classification of Cellular Network Drive Test Results." Methods for determining $P\{\Phi_T(p)\}$ are described in U. S. Patent Application 10/282,482, filed October 29, 2002, entitled "Determining Cell Service Areas in a Wireless Network," which is assigned to the assignee of the present patent application, and whose disclosure is incorporated herein by reference.

Evaluator 44 also receives (or is programmed in advance with) the quality distribution Q as a function of C/I and C/A ratios. In this embodiment, C/I refers to the ratio of the power of the carrier frequency in question in a given sector to the power of signals transmitted by other sectors on the same frequency (co-channel interference), while C/A refers to the ratio of the carrier frequency power to the power of signals transmitted by other sectors on adjacent frequencies. In other words, for each value $x$ of the C/I and C/A ratios, and for each quality level r, the probabilities $P\{Q = r|C/I = x\}$ and $P\{Q = r|C/A = x\}$ are given. Based on these known probability correspondences, the probability that the quality level in a given bin is not greater than $r$, given C/I = x, is given by:

$$w^{CO} = P\{Q \leq r \mid C/I = x\} = \sum_{i=0}^{r} P\{Q = i \mid C/I = x\} \quad (1)$$

Similarly, for C/A = x:

$$w^{adj} = P\{Q \leq r \mid C/A = x\} = \sum_{i=0}^{r} P\{Q = i \mid C/A = x\} \quad (2)$$

In order to determine C/I and C/A for each frequency in each sector or bin, evaluator 44 first estimates the probability that neighboring sectors will transmit interfering signals on these frequencies and on the adjacent frequencies, at a transmission probability estimation step 54. In other words, for each frequency $f$, evaluator 44 determines the probabilities $P\{T_T^f\}$ and $P\{U_T^f\}$. These probabilities depend on the traffic level in each sector, as well as on radio parameters of each sector, including the number of TRX cards (TRX), the CHALLOC parameter and the hopping type. In addition, the probabilities may be affected by the discontinuous transmission feature (DTX) used in some GSM networks, whereby no signal is transmitted (uplink, downlink or both) during time slots in which the relevant call participant is not speaking. Note that DTX cannot be applied to the downlink BCCH frequency.

The measured or estimated traffic in each sector is distributed between the control channel (BCCH) and traffic channels (TCH), i.e., traffic = BCCHTraffic + TCHTraffic. The distribution of the traffic between the BCCH and TCH is determined by CHALLOC, as follows:

• For CHALLOC = 0 (no priority), the traffic is distributed uniformly between BCCH and TCH, i.e.,

$$BCCHTraffic = \frac{1}{TRX} \ Traffic \quad (3)$$

$$TCHTraffic = \frac{TRX - 1}{TRX} \ Traffic \quad (4)$$

• For CHALLOC = 1 (BCCH has priority), the traffic share that is carried by the TCHs can be estimated, for example, using the Erlang-B model, as is known in the art:

$$TCHTraffic = Traffic \cdot ErlangB (8, \ Traffic), \quad (5)$$

wherein ErlangB gives the blockage probability of the BCCH, assuming eight available time slots on the BCCH and the given level of traffic in a bounded Poisson distribution, as is known in the art: $ErlangB (k, \ Traffic) = a \frac{Traffic^k}{k!}$, wherein

$$a = \frac{1}{\displaystyle\sum_{i=0}^{k} \frac{Traffic^i}{i!}}.$$ The traffic carried by the BCCH is

then simply:

$$BCCHTraffic = Traffic - TCHTraffic. \tag{6}$$

- For CHALLOC = 2 (TCH has priority), the traffic share that is carried by the BCCH is given approximately by:

$$BCCHTraffic = Traffic \cdot \text{ErlangB} \left(8(TRX - 1),\ Traffic\right), \tag{7}$$

and the traffic carried by the TCHs is:

$$TCHTraffic = Traffic - BCCHTraffic. \tag{8}$$

Distribution of the TCH traffic share among the available traffic channels depends, as noted above, on the hopping type, as well as on stack use.

Based on the traffic distributions, the probabilities $P\{T_T^f\}$ and $P\{U_T^f\}$ are determined as follows:

$$P\{U_T^f\} = \begin{cases} \dfrac{BCCHTraffic}{8} & f \in BCCH \\[4mm] \dfrac{TCHTraffic}{8(TRX-1)} & f \in TCH \end{cases} \tag{9}$$

For the downlink:

$$P\{T_T^f\} = \begin{cases} 1 & f \in BCCH \\[4mm] \dfrac{TCHTraffic}{8(TRX-1)} \cdot DTXDL & f \in TCH \end{cases} \tag{10}$$

For the uplink:

$$P\{T_T^f\} = \begin{cases} \dfrac{BCCHTraffic}{8} \cdot DTXUL & f \in BCCH \\[4mm] \dfrac{TCHTraffic}{8(TRX-1)} \cdot DTXUL & f \in TCH \end{cases} \tag{11}$$

Here the DTXDL and DTXUL factors are used to account for the possible application of the above-mentioned DTX feature:

$$DTXUL = \begin{cases} Sp & DTX \ used \ on \ uplink \\ \\ 1 & otherwise \end{cases} \qquad (12)$$

$$DTXDL = \begin{cases} Sp & DTX \ used \ on \ downlink \\ \\ 1 & otherwise \end{cases} \qquad (13)$$

wherein Sp is the speech percentage of the total call time.

Although the formulas above are explicitly based on network parameters used in GSM cellular networks, they may be modified in a straightforward manner to account for the alternative parameters used in other narrowband networks, such as TDMA networks. The necessary changes in the formulas will be apparent to those skilled in the art.

Based on the transmission probabilities found in step 54, evaluator 44 computes the estimated probability of interference for each frequency in each sector and/or each bin. The probability of interference per sector is calculated at a sector interference probability estimation step 56. For a randomly-chosen call in sector $T$, at a randomly-chosen moment $TS$ (on any frequency $f$ in $F(T)$), the probability that the call will have a quality level of at least $r$ can be calculated as follows:

$$P\{Q_T \leq r\} = \sum_{f \in F(T)} P\{\Theta_T^f\} P\{Q_T \leq r \mid \Theta_T^f\} \qquad (14)$$

(Recall that the quality level $r = 0$ represents "perfect" quality, with quality decreasing as $r$ increases.) The probability of $\Theta_T^f$ is given by:

$$P\{\Theta_T^f\} = \frac{P\{U_T^f\}}{\sum_{g \in F(T)} P\{U_T^g\}} \qquad (15)$$

Assuming that interference events originating from different interfering sectors $S \in N(T)$ are independent, the second term in equation (14) is given by:

$$P\left\{Q_T \leq r \mid \Theta_T^f\right\} = \prod_{S \in N(T)} \left[\left(1 - P\left\{T_S^f \cup T_S^{f-} \cup T_S^{f+}\right\}\right) + \right.$$

$$P\left\{T_S^f\right\} P\left\{Q_T \leq r \mid \Theta_T^f, T_S^f\right\} +$$

$$\left.\left(P\left\{T_S^{f-} \cup T_S^{f+}\right\} P\left\{Q_T \leq r \mid \Theta_T^f, T_S^{f-} \cup T_S^{f+}\right\}\right)\right]$$

$$= \prod_{S \in N(T)} \left[\left(1 - P\left\{T_S^f\right\} - P\left\{T_S^{f-}\right\} - P\left\{T_S^{f+}\right\} + P\left\{T_S^{f-}\right\} P\left\{T_S^{f+}\right\}\right) + \right.$$

$$P\left\{T_S^f\right\} P\left\{Q_T \leq r \mid \Theta_T^f, T_S^f\right\} +$$

$$\left.\left(P\left\{T_S^{f-}\right\} + P\left\{T_S^{f+}\right\} - P\left\{T_S^{f-}\right\} P\left\{T_S^{f+}\right\}\right) P\left\{Q_T \leq r \mid \Theta_T^f, T_S^{f-} \cup T_S^{f+}\right\}\right]$$

$$(\text{equation } 16)$$

In these expressions, *f-* and *f+* refer to the adjacent frequency channels, directly below and above the frequency *f*. The expression $P\{T_S^f \cup T_S^{f-} \cup T_S^{f+}\}$ refers to the probability that a neighboring sector transmits on either the co-channel *f* or either adjacent channel. Since no sector may be allocated two directly-adjacent frequencies, in practice either $P\{T_S^{f-}\}$ = 0 or $P\{T_S^{f+}\}$ = 0 for each sector *s* and frequency *f*. The possibility that an interfering sector will transmit on both *f-* and *f+* is accounted for by the cross-term $P\{T_S^{f-}\} P\{T_S^{f+}\}$ in equation (16).

Alternatively or additionally, evaluator 44 may determine the quality distribution per bin *p*, $P\{Q_p \leq r\}$, at a bin quality computation step 58:

$$P\left\{Q_p \leq r\right\} = \sum_{T \in N(p)} P\left\{\Phi_T(p)\right\} P\left\{Q_p \leq r \mid \Phi_T(p)\right\}$$

$$= \sum_{T \in N(p)} P\left\{\Phi_T(p)\right\} \sum_{f \in F(T)} P\left\{\Theta_T^f \mid \Phi_T(p)\right\} P\left\{Q_p \leq r \mid \Phi_T(p), \Theta_T^f\right\}$$

$$(\text{equation } 17)$$

This equation takes into account the probability $P\{\Phi_T(p)\}$ that sector *T* serves bin *p*, among the different sectors that may serve mobile stations in this bin. In similar fashion to equation (16) above,

$$P\left\{Q_p \leq r \mid \Phi_T(p), \Theta_T^f\right\} = \prod_{S \in N(p) \backslash T} \left[\left(1 - P\left\{T_S^f\right\} - P\left\{T_S^{f-}\right\} - P\left\{T_S^{f+}\right\} + P\left\{T_S^{f-}\right\} P\left\{T_S^{f+}\right\}\right) + \right.$$

$$P\left\{T_S^f\right\} P\left\{Q_p \leq r \mid \Phi_T(p), \Theta_T^f, T_S^f\right\} +$$

$$\left.\left(P\left\{T_S^{f-}\right\} + P\left\{T_S^{f+}\right\} - P\left\{T_S^{f-}\right\} P\left\{T_S^{f+}\right\}\right) P\left\{Q_p \leq r \mid \Phi_T(p), \Theta_T^f, T_S^{f-} \cup T_S^{f+}\right\}\right]$$

$$(\text{equation } 18)$$

The terms $P\{T_S^f\}$, $P\{T_S^{f-}\}$ and $P\{T_S^{f+}\}$ were determined at step 54, as given in equations (9), (10) and (11). The remaining terms may be calculated based on the known probabilities $w^{co}$ and $w^{adj}$, given by equations (1) and (2) above:

$$P\{Q_p \le r \mid \Phi_T(p),\ \Theta_T^f,\ T_S^f\} = w^{co}(R_T(p) - R_S(p),\ r) \tag{19}$$

$$P\{Q_p \le r \mid \Phi_T(p),\ \Theta_T^f,\ T_S^{f^-} \cup T_S^{f^+}\} = w^{adj}(R_T(p) - R_S(p),\ r) \tag{20}$$

Thus, evaluator 44 is able to provide a quality measure, $P\{Q_p \le r\}$, for each sector or bin 29 served by network 20. These per-sector and/or per-bin measures may be converted into an overall network quality measure, at a total quality estimation step 59, typically by taking a weighted average of the per-sector or per-bin measures over the entire network service region. It will be observed from the description above that the quality measures are sensitive not only to the frequency allocation list (MAL) of each sector, but also to other radio parameters, such as the number of TRX cards in each sector, channel type priority, stack uses and hopping parameters. Therefore, the effect of changing any of these parameters (in all sectors or a particular sector or set of sectors) on the network service quality can be determined by calculating and comparing the different quality measures obtained using the different radio parameter settings. The quality measures can thus be used to optimize the frequency allocation list and/or other radio parameter settings for each sector in network 20.

## QUALITY EVALUATION BASED ON INTERFERENCE SUMS

In determining the effect of interference on service quality, the method described above considers only the effect of the strongest interfering signal on any given frequency in a given sector or geographical bin. In practice, however, there may be multiple simultaneous interferers, whose effect on service quality may be cumulative. To address these cumulative effects, the C/I ratio in each bin or sector within network 20 may be expressed in terms of a histogram of the form shown below in Table I:

TABLE I -

| SAMPLE HISTOGRAM | | | | |
|---|---|---|---|---|
| Bin # | Bin C/I ($k_i$) | From (dB) | Up to (dB) | H(i) |
| 0 | -5.00 | $-\infty$ | -4.75 | 0.05 |
| 1 | -4.50 | -4.75 | -4.25 | 0.01 |
| 2 | -4.00 | -4.25 | -3.75 | 0.03 |
| 3 | -3.50 | -3.75 | -3.25 | 0.02 |
| ... | | | | |
| 19 | 4.50 | 4.25 | 4.75 | 0.10 |
| ... | | | | |
| 59 | 24.50 | 24.25 | 24.75 | 0.06 |
| 69 | 29.50 | 29.25 | 29.75 | 0.05 |
| 70 | 30.00 | 29.75 | 30.25 | 0.03 |
| 71 | $+\infty$ | 30.25 | $+\infty$ | 0.20 |
| Total | | | | 1.00 |

Each bin in the histograms corresponds to a range of C/I values with a resolution $d = 0.5$ dB, in the present example. (The histogram bins correspond to C/I power ranges, and should not be confused with geographical bins 29 used in other embodiments described herein.) Each bin $i$ is represented by the C/I value $k_i$ at the center of its C/I range and holds the probability value $H(i)$ that the C/I ratio for the bin or sector will be within the range of the bin. The top bin, with value $k_0$, contains the probability all C/I values below a selected minimum (-5 dB in the present example). The bottom bin, with value $k_{B-1}$, contains all C/I values above a selected maximum (30 dB in the present example), for which the interference level is considered to be negligible. The number of bins, $B$, is given by $B = \frac{k_{B-1} - k_0}{d} + 1$. The resolution $d$, and hence the number of bins, may be varied in order to trade off the speed of computation against precision. The probability values $H(i)$ listed in the last column of the table shown above are arbitrary, but are in any case expected to sum to one.

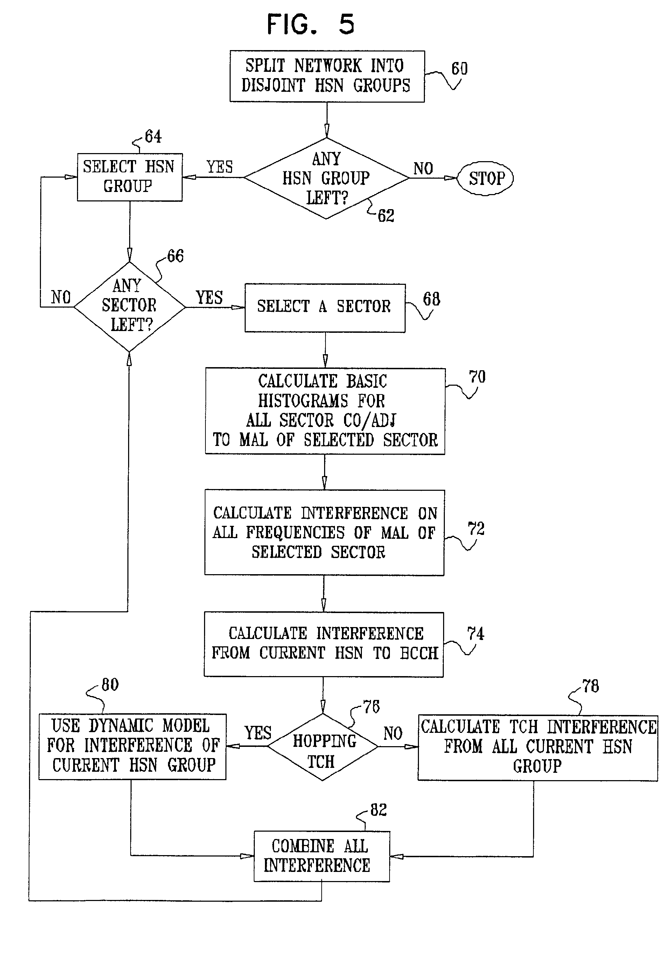

Fig. 5 is a flow chart that schematically illustrates a method for calculating C/I histograms of this sort for sectors in a cellular network, in accordance with an embodiment of the present invention. These histograms can then be combined by one of quality evaluators 44 with a quality correspondence function, such as that shown above in equation (1), to determine the service quality distribution in the network for each sector. (Note that the C/I histograms constructed in accordance with the method described below take into account the effects of both co-channel and adjacent interferers, so that a separate C/A quality correspondence, as given in equation (2), is not needed in this case.) Although in the present embodiment, the C/I histogram is calculated on a sector-by-sector basis, this method may easily be modified to calculate bin-by-bin C/I histograms, as in the embodiment of Fig. 4.

The method of Fig. 5 takes into account explicitly the effect of frequency hopping in HSN groups. For this purpose, a HSN group is defined as a set of synchronized sectors having the same HSN. All sectors (transceivers) at a single transceiver site in a GSM network are typically synchronized with one another, and are thus considered to belong to the same HSN group; but each TRX card has a different, respective MAIO. Transceivers at different sites may belong to the same HSN group. In most GSM networks, however, different sites are not mutually synchronized. Therefore, the interference experienced by a "victim" sector due to transmissions in other sectors is not influenced substantially by whether the other sectors are in the same HSN group or in a different HSN group from the victim sector. This assumption is no longer true in synchronized GSM networks, however, which are coming into increasing use.

To deal with frequency hopping in synchronized networks, quality evaluator 44 begins the method of Fig. 5 by dividing network 20 into disjoint HSN groups, at a partitioning step 60. When the network is not synchronized, each HSN group includes only the sectors in a single site that have the same HSN. In a synchronized network, however, the HSN group includes all sites having the same HSN. The C/I calculations continue group-by-group until all HSN groups in the network have been covered, at a group completion step 62. As long as another HSN group remains to be calculated, workstation selects the next HSN group, at a group selection step 64. It then proceeds to calculate the C/I histogram for each of the sectors in the current HSN group, until no further sectors remain, at a sector completion step 66.

Workstation 28 selects the next victim sector to process in the current HSN group, at a sector selection step 68. For each of the frequencies in the MAL (the frequency allocation list) of the victim sector, the workstation computes a basic C/I histogram for all potential interferers, at a basic histogram calculation step 70. The potential interferers for each frequency of the victim sector comprise all other sectors whose MAL includes the same frequency or an adjacent frequency. For each frequency, the strength of the signals received in the victim sector from each other sector is known, typically on the basis of drive tests or other measurements or estimation methods. Therefore, it is a simple matter to compute a basic C/I histogram, representing the ratio of the signal power transmitted by the victim sector on the frequency in question to the signal received from each interfering sector by mobile units served by the victim sector. For adjacent channel interference, the C/I values are shifted up by a fixed amount, for example, 18 dB, so that the actual received power of the adjacent channel is "discounted" by 18 dB in constructing the basic histogram for this interferer.

The basic C/I histogram for each interferer is also adjusted for the probability that the interferer actually transmits a signal on the frequency in question at a given time. When the frequency is a control channel (BCCH) of the interfering sector, it is transmitted all the time. For traffic channels (TCH), on the other hand, the probability of transmission is determined by the traffic level in the interfering sector. This probability can be determined from network traffic statistics or from *a priori* considerations, as described above in the method of Fig. 4. Assuming a given interfering TCH has a probability $p<1$ of being transmitted at any given time, the probability values $H(i)$ in the basic histogram for this TCH would be reduced by a factor of $p$, relative to the values for a BCCH of comparable strength, while the value in the bottom bin (corresponding to no interference from this TCH) would be set to $(1-p)$.

Evaluator 44 combines the basic interference histograms of all interferers outside the HSN group of the current sector, at a histogram combination step 72. This operation is performed separately for each frequency in the MAL of the current victim sector. The basic C/I histograms, $H_0$ and $H_1$, due to different interferers on the same frequency are convolved, using novel histogram arithmetic described below, to give the combined histogram $H = H_0 * H_1$. This operation is performed, essentially, by converting the logarithmic C/I units of $H_0$ and $H_1$ into a linear power scale, summing the linear interference values to give combined interference power values, and then finding the probability of occurrence of each combined power value based on the basic C/I histograms. The result is converted back into logarithmic C/I units to give the combined histogram $H$. The combined histograms may be convolved associatively with other basic or combined histogram to give the final combined histogram for each interfering frequency.

The histogram convolution can be performed conveniently using a lookup table to associate each pair of bins $(i,j)$ in the two input histograms (i.e., bin $i$ in histogram $H_0$ and bin $j$ in histogram $H_1$) with a target bin $k$ in the output histogram $H$. The lookup table is built by calculating and then inverting a matrix $M$, for which the matrix elements $M(i, j)$ in column $j$ of row $i$, and *vice* versa, is $k$. For each pair of bins, $0 \leq i \leq j \leq B - 1$, a value $v$ is calculated as follows:

$$v \leftarrow 10 \log_{10}(\frac{1}{10^{-\frac{k_0 + id}{10}} + 10^{-\frac{k_0 + jd}{10}}}) \qquad (21)$$

The corresponding target bin is then determined as follows:

$$k \leftarrow \left\lfloor \frac{v - k_0}{d} + \frac{1}{2} \right\rfloor \qquad (22)$$

To keep the same number of bins (B) in the output histogram as in the input histograms, if $k < 0$, $k \leftarrow 0$, whereas if $k > B - 1$, $k \leftarrow B - 1$. For each $i$ and $j$, the corresponding matrix elements are set as follows:

$$M(i, j) \leftarrow k$$
$$\qquad (23)$$
$$M(j, i) \leftarrow k$$

The lookup table gives the set of input bin pairs for each output bin: $L(k) = \{(i, j) \mid M(i, j) = k\}$. The convolved histogram values are given by:

$$H(k) = \sum_{(i, j) \in L(k)} H_0(i) H_1(j) \qquad (24)$$

The effect of noise may also be taken into account in the combined histograms determined in this fashion. The noise may be represented as a carrier/noise (C/N) probability histogram, **H**$_N$, having a Gaussian distribution in the logarithmic C/I domain, centered on C/I = 0 dB. The variance of the noise histogram corresponds to the characteristic variation of actual signals and interference that occurs in network 20. The result of adding noise to a given histogram $H_0$ can be expressed as:

$$H(k) = \sum_{i=0}^{B-1} H_0(i) H_N(k - i) \qquad (25)$$

After computing the C/I histograms due to interferers outside the current HSN group, evaluator 44 next finds the C/I histogram for the BCCH of the current sector due to other sectors within the HSN group of the current sector, at a BCCH histogram calculation step 74. This combined histogram is found by convolving the basic C/I histograms due to these interferers, using the calculation method of equations (24) and (25).

The C/I histogram of each TCH due to other sectors within the HSN group of the current sector depends on the hopping mode of the current sector, as indicated at a hopping mode determination step 76. If the TCH in question is not part of a hopping sequence, then the C/I histogram for this TCH due to other sectors within the same HSN group is calculated simply by convolution, at a non-hopping histogram calculation step 78. This calculation is performed similarly to the BCCH histogram at step 74.

On the other hand, if the current victim TCH is part of a hopping sequence, a dynamic hopping model is used to calculate its C/I histogram, at a hopping histogram calculation step 80. At each point in time that the victim TCH is transmitted, each of the other sectors in the HSN group of the victim sector transmits certain specific frequencies, as determined by the HSN and by the MAIO of each sector. Thus, based on the known HSN and MAIO of each sector in the HSN group, it is possible to determine which interfering sectors may transmit signals on the same frequency as the victim TCH or on adjacent frequencies during each successive time slot. This information is used in finding the combined probability histogram for each hopping TCH.

Quality evaluator 44 combines the C/I histograms determined for each frequency channel in the MAL of the current sector to obtain a combined histogram for the entire sector, at a total histogram determination step 82. Typically, the histograms for the traffic channels are combined together first into a single histogram, and the result is then combined with the histogram of the control channel. Evaluator 44 begins step 82, for each frequency, by combining the C/I histograms due to interferers outside the current HSN group, calculated at step 72, with the C/I histograms due to interferers within the current HSN group, calculated at step 74 (for BCCH) or step 78 or 80 (for TCH). The histograms are combined using the convolution method of equation (24).

Finally, the effective C/I histogram for the entire sector is calculated by taking a weighted sum of the combined histograms of all $n$ frequency channels in the MAL of the sector:

$$H(i) = \sum_{j=0}^{n-1} \beta_j H_j(i) \tag{26}$$

The weights $\beta_1$, $\beta_2$, ... , $\beta_{n-1}$ correspond to the relative probabilities of use of the corresponding channels in the victim sector, as determined by the radio parameters and the traffic in the sector. The weights are normalized so that their sum is one. As noted above, the per-sector C/I histograms determined in this manner may be translated into quality measures, which are then used in optimizing the frequency allocation and radio parameters used in the different sectors of network 20.

QUALITY EVALUATION BASED ON DROP-CALL PROBABILITIES

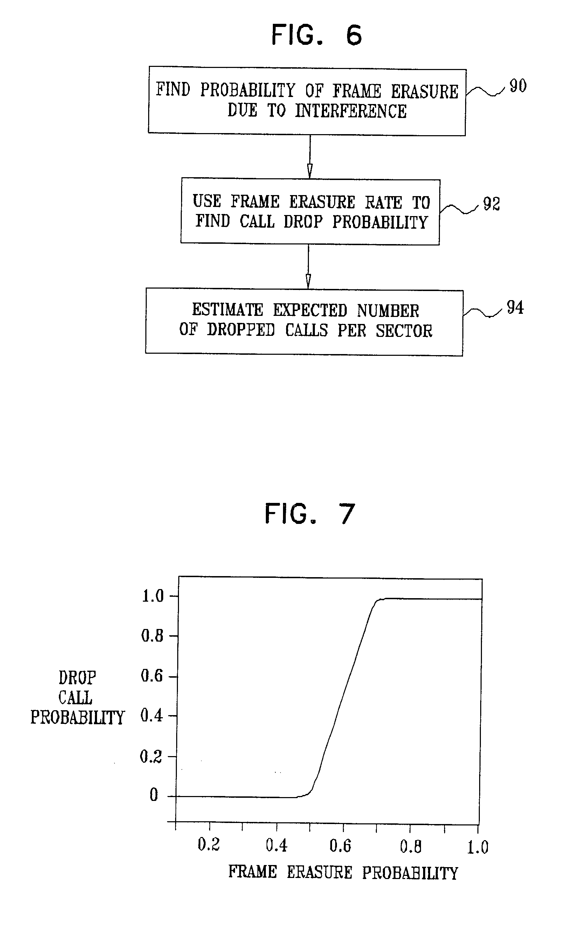

Fig. 6 is a flow chart that schematically illustrates a method for quality evaluation in network 20 implemented by another one of quality evaluators 44, in accordance with an embodiment of the present invention. This method is based on calculating the probability of calls being dropped due to interference in the network. It assumes that interference between the sectors in the network has been measured, and that this interference has been used to determine the impact matrix, as described above. Briefly, each element of the impact matrix (referred to as **IM**) represents the interference between two cells $i$ and $j$ in network 20, such that:

$$IM_{i,j} = \text{Pr}[\text{losing a time-slot in cell } i | \tag{27}$$
$$\text{reuse between } i \text{ and } j]$$

In other words, $IM_{i,j}$ is the probability of losing a time-slot of transmitted data in cell $i$ due to interference from cell $j$, in the event that $i$ and $j$ are transmitting simultaneously on the same frequency. The matrix **IM** is not necessarily symmetrical. The impact matrix elements are calculated based on readily-available network data, such as switch statistics, drive test measurements and signal strength predictions, as described in the above-mentioned U.S. Patent 6,487,414.

Quality evaluator 44 uses the impact matrix to calculate the probability of losing a frame of voice data during a call, at a frame erasure assessment step 90. Each frame in a GSM network is 20 ms in duration, comprising four 5 ms time slots. Each transmitter supports eight time slots per frequency, so that each call uses one in every eight time slots on its assigned frequency. It is assumed for the purposes of the description that follows that calls are distributed among the available frequencies at random. Therefore, the probability of losing a frame of data in a given sector is simply the average of the respective probabilities $p_1$, ..., $p_k$ of losing a frame on each of the frequencies used by the sector, $f_1$, ..., $f_k$:

$$p = \frac{1}{k} \sum_{i=1}^{k} p_i \tag{28}$$

The probability $p_i^{(s)}$ of losing a frame on frequency $f_i$ in sector $c$ due to transmission by another specific sector $s$ on this frequency is given simply by:

$$p^{(s)}_i = IM_{s,c} \cdot \Pr\{s \text{ uses } f_i\} \tag{29}$$

The probability of $s$ using frequency $f_i$ depends on the traffic $C_s$ in sector $s$ and the number of TRX cards $T_s$ used in sector $s$. (The number of TRX cards must be no greater than the number of frequencies $F_s$ allocated to sector $s$, but it may be less, i.e., $T_s \le F_s$.) Based on the traffic, the probability that sector $s$ is using $t$ of its $T_s$ transmitters at a given moment can be expressed as follows:

$$p(T_s, C_s, t) = \sum_{m=t}^{8T} p_m \frac{\binom{T}{t}\binom{7T}{m-T}}{\binom{8T}{m}} \tag{30}$$

Here $p_m$ is the probability that $m$ time slots are used in sector $s$, which is given by the Erlang-B model, as is known in the art:

$$p_m = \frac{p_0 C^m}{m!}, \quad \text{wherein} \quad p_0 = \left(\sum_{j=0}^{8T} \frac{C^j}{j!}\right)^{-1} \tag{31}$$

The probability that sector $s$ transmits on frequency $f_i$, assuming the sector to be transmitting simultaneously on $t$ transmitters is simply $t/F_s$. Therefore, substituting back into equation (29):

$$p_i^{(s)} = IM_{s,c} \sum_{t=1}^{T_s} \frac{t}{F_s} \cdot p(T_s, C_s, t) \tag{32}$$

This probability calculation applies to interference from a single interfering cell. The total probability of losing a frame due to transmission on frequency $f_i$ by any of the cells in the set $N(i)$ having this frequency in their MAL is then:

$$p_i = 1 - \prod_{s \in N(i)} \left(1 - p_i^{(s)}\right) \tag{33}$$

Note that equations (29) through (32) relate only to interference due to co-channel transmission by the interfering cell on the frequency $f_i$ of the victim cell. To accurately account for all interference, adjacent-channel transmission should be taken into account, as well. In view of the description of the treatment of adjacent channel interference with regard to the other embodiments described hereinabove, the straightforward extension of the present embodiment to account for adjacent-channel interference will be apparent to those skilled in the art, and is omitted here for the sake of brevity.

Alternatively, the methods described above with reference to Fig. 4 or Fig. 5 may be used to determine the probability of losing a frame or time slot. Note that the methods described above relate explicitly to both co-channel and adjacent-channel interference, as well as to the distinction in behavior between transmitters on BCCH and TCH frequencies. The C/I probability values or histograms determined by the methods described in the preceding embodiments may be translated into frame loss probabilities, for example, by use of an appropriate correspondence formula, such as those defined in equations (1) and (2).

Based on the lost frame probability $p$, as determined from equation (27) or by another suitable method, workstation 28 estimates the probability P that a call in a given cell will be dropped due to interference, at a drop estimation step 92. GSM networks use a constant *MAX,* which can take a value between 4 and 64, in determining when a call should be dropped. When a call is initiated, it is allocated a counter whose value is set to *MAX.* Any voice frames lost are reported to the network every 480 ms (in a Slow Associated Control Channel [SACCH] frame, as defined by GSM standards). Mobile units served by a BCCH TRX have their SACCH on the BCCH TRX, while mobile units served by a TCH TRX have their SACCH on the TCH TRX. Whenever a frame is lost, the counter is decreased by one. Whenever a frame is received successfully, the counter is increased by 2, with the exception that it cannot be larger than *MAX.* When the counter drops to 0, the call is dropped. Note that the value of *MAX* influences the probability P, of a dropcall. A small value of *MAX* causes the call to be dropped even if there is only a momentary drop in quality, whereas a high value may sustain a call for a long duration of bad quality.

The process of increasing and decreasing the drop-call counter during a given call can be viewed as a transition chain with *MAX*+1 states. The probability of the state transitions can be assumed to depend only on the current state (i.e., the counter value) of the call, and on the interfering signals, irrespective of any previous state of the call. Therefore, the sequence of counter values is a Markov chain, which is governed by a matrix **M** of transition probabilities. (The theory of Markov chains is described, for example, by Feller in *An Introduction to Probability Theory and Its Application,* (John Wiley & Sons, 1968), Volume I, Chapter XV, pages 372-427, which is incorporated herein by reference.) When a call reaches state 0, it is dropped with probability 1. Otherwise, the state may be decremented by 1, with probability $p$, given by equation (28) above, or incremented by 2 (except in state *MAX* or *MAX*-1), with probability $q = 1 - p$. For *MAX* = 5, for example, **M** will then have the following form:

$$\mathbf{M} = \begin{pmatrix} 1 & 0 & 0 & 0 & 0 & 0 \\ p & 0 & 0 & q & 0 & 0 \\ 0 & p & 0 & 0 & q & 0 \\ 0 & 0 & p & 0 & 0 & q \\ 0 & 0 & 0 & p & 0 & q \\ 0 & 0 & 0 & 0 & p & q \end{pmatrix} \qquad (34)$$

It is a characteristic of Markov chains that the probability $p^k(i,j)$ of going from state $i$ to state $j$ after $k$ steps of the process in question is $\mathbf{M}^k_{i,j}$, i.e., the $(i,j)$ entry of **M** raised to the kth power. The probability $P$ of a dropped call within $n$ frames is thus $\mathbf{M}^n_{MAX,0}$, i.e., the lower-left entry in the $n$th power of the matrix. An average value of $P$ can be determined for a given cell based on the average duration of calls in the cell or network, i.e., by setting $n$ equal to the average number of frames in a call. Alternatively, a histogram of $P$ may be developed for different call durations.

As a further alternative for determining the dropped-call probability, a further state can be added to the transition chain corresponding to normal call termination, and an additional row and column are accordingly added to **M**. The entries in the new column, except in the first and last rows, are given by the probability of normal call termination. This probability is simply $1 - e^{-\mu t}$, wherein t is the duration of one SACCH frame (480 ms), and $\mu$ is $1/E$, wherein $E$ is the average call duration. The $p$ and $q$ probabilities are renormalized so that the sum of probabilities in each row remains one. The resulting expanded transition matrix is as follows:

$$M = \begin{pmatrix} 1 & 0 & 0 & 0 & 0 & 0 & 0 \\ pe^{-\mu t} & 0 & 0 & qe^{-\mu t} & 0 & 0 & 1-e^{-\mu t} \\ 0 & pe^{-\mu t} & 0 & 0 & qe^{-\mu t} & 0 & 1-e^{-\mu t} \\ 0 & 0 & pe^{-\mu t} & 0 & 0 & qe^{-\mu t} & 1-e^{-\mu t} \\ 0 & 0 & 0 & pe^{-\mu t} & 0 & qe^{-\mu t} & 1-e^{-\mu t} \\ 0 & 0 & 0 & 0 & pe^{-\mu t} & qe^{-\mu t} & 1-e^{-\mu t} \\ 0 & 0 & 0 & 0 & 0 & 0 & 1 \end{pmatrix}$$

(equation 35)

When **M** is raised to a high power, as described above, two entries will remain in the next-to-last row: the first column entry giving the drop-call probability, and the last entry giving the probability of normal termination.

Based on the drop-call probability, evaluator 44 estimates the expected number of calls that will be dropped in each sector of network 20, at a drop estimation step 94. The number of dropped calls in each sector is a quality measure, which the operator of network 20 typically wishes to minimize. Furthermore, the drop-call probability quality measure for the entire network can be computed simply by taking an average of the individual sector probabilities, weighted by the traffic in each sector.

Fig. 7 is a plot that schematically illustrates the dependence of the drop-call probability $P$ on the frame erasure probability $p$, computed in the manner described above. The computation illustrated by Fig. 7 assumes that $MAX = 16$, and that the average duration of a call is 300 SACCH frames (480 ms each), or about 144 sec. The sharp, non-linear dependence of $P$ on $p$ illustrates the advantage of frequency hopping in the presence of frequent interference. For example, if in a given sector, one or several frequencies have a frame erasure probability of 0.7 or above, and frequency hopping is not used, substantially all calls on these frequencies will be dropped due to frame erasure. If the remaining frequencies in the sector have frame erasure probabilities of 0.4 or below, substantially no calls on these frequencies will be dropped. If frequency hopping is used, however, the average frame erasure probability for all calls will be in the range of 0.4 to 0.5 or below, so that substantially none of the calls will be dropped.

Although the method of Fig. 6 is described above with reference to sector traffic statistics and interference estimates, a more accurate estimate of the drop-call probability may be obtained by determining the frame erasure probability bin by bin. In other words, traffic statistics and interference characteristics may be determined for each geographical bin 29 in the service area of network 20, as in the method of Fig. 4 described above. The modifications required in the method of Fig. 6 to use the bin-by-bin network data will be apparent to those skilled in the art, based on the description above.

Quality measures based on drop-call probability may be used in optimizing various network parameters, for example:

- Number of frequencies per sector. Changing the number of frequencies in a given sector affects the probability that each of the frequencies allocated to the sector will be transmitted at any given time, thus changing the probabilities of interference - both for the given sector and its neighbors. Furthermore, based on Fig. 7, it will be observed that if the frame erasure probability in a given sector is already less than the threshold at which the drop-call probability starts to grow (i.e., $p \leq 0.4$ in the example computed here), there is little marginal benefit in adding a frequency to this sector.

- TRX size (number of TRX cards used in each sector). This parameter affects the probability that a given frequency will be used in a sector to which it is allocated, as illustrated by equation (30). Therefore, the TRX size has an impact on frame erasure and dropped-call probabilities.

- Channel type priority. As noted above, this parameter determines the order of assignment of the BCCH and TCH frequencies. This order, in turn, affects the probability of use of each of the frequencies allocated to a given sector, and therefore affects the frame erasure and drop-call probabilities in both the given sector and its neighboring sectors.

- Hopping mode. In low-traffic, low-noise areas of the network, the frame erasure probability is low, so that little benefit is gained by frequency hopping. On the other hand, in areas in which certain frequencies are characterized by high interference, the drop-call quality measure will indicate whether baseband hopping or synthesized hopping is superior, based on the different effect that the hopping modes have on the frame erasure probabilities.

Although embodiments of the present invention are presented above with particular reference to optimization of GSM cellular networks (which may include GPRS data transmission capabilities), the methods described herein are similarly applicable, *mutatis mutandis,* to other types of narrowband cellular networks, such as TDMA networks. Furthermore, the principles of the present invention may be applied in optimization of broadband cellular networks, such as CDMA and UMTS networks, as well as other types of wireless networks, as are known in the art.

It will thus be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

**Claims**

1. A method for configuring a wireless communication network (20), comprising:

   receiving input data **characterizing** a plurality of sectors in the network;
   computing, based on the input data, a measure of quality of service in the network as a function of a radio parameter that can be set by an operator of the network in order to determine an operating characteristic of a transmitter serving at least one of the sectors, other than a frequency allocation list of the at least one of the sectors; and
   determining an optimal setting of the radio parameter responsively to the measure of quality.

2. The method according to claim 1, wherein receiving the input data comprises receiving an indication of communication traffic density with respect to a plurality of areas in a service region of the network, the areas comprising at least one of a set of the sectors and a set of geographical bins, such that each of at least some of the geographical bins is served by two or more of the sectors, and
   wherein computing the measure comprises determining one or more respective values of the measure for each of the areas.

3. The method according to claim 1 or 2, wherein receiving the input data comprises receiving an estimate of interference with radio signals in the at least one of the sectors due to transmissions from others of the sectors in the network, and wherein computing the measure comprises computing a probability distribution of a carrier/interference (C/I) ratio in the at least one of the sectors based on the estimate of the interference.

4. The method according to claim 3, wherein calculating the probability distribution comprises calculating a histogram of probabilities that is indicative of the C/I ratio due to the interference from two or more of the others of the sectors.

5. The method according to any of the preceding claims, wherein computing the measure comprises computing, based on the input data and on a setting of the radio parameter, at least one of a received signal quality indicator, a bit error rate, a frame erasure rate, a probability of dropping a call made to or from a mobile unit in the at least one of the sectors, an indication of accessibility of the network, and a probability of a handover failure in the network.

6. The method according to any of the preceding claims, wherein the radio parameter comprises at least one of a TRX size indicating a number of transmitter cards to be used in the at least one of the sectors, a stack use parameter indicating an order of use of the transmitter cards, a channel allocation policy parameter indicative of an allocation of calls to a control channel or a traffic channel in the at least one of the sectors, a slot allocation policy parameter indicative of an allocation of time slots to the calls, a handover parameter for controlling a handover of a mobile unit between the sectors, a hopping type parameter indicative of a type of frequency hopping implemented by the transmitter, a hopping serial number (HSN) used in controlling the frequency hopping, and a mobile allocation index offset (MAIO).

7. The method according to any of the preceding claims, and comprising determining a number of frequency channels to include in the frequency allocation list based on the measure.

**8.** A method for configuring a wireless communication network (20), comprising:

receiving input data **characterizing** a plurality of sectors in the network, the input data comprising an indication of communication traffic density in each of the sectors and an estimate of interference among the sectors; computing, based on the input data, for each sector among the plurality of the sectors, a probability distribution of a carrier/interference (C/I) ratio of calls to and from mobile units served by the sector due to the interference from other sectors among the plurality of the sectors; determining a measure of quality of service in the network as a function of the probability distribution; and setting one or more radio parameters of the network responsively to the measure of quality.

**9.** A method for configuring a wireless communication network (20), comprising:

receiving input information **characterizing** a plurality of sectors in the network, the input data comprising an indication of communication traffic density in each of the sectors and an estimate of interference among the sectors; computing, based on the input information, for each sector among the plurality of the sectors, a drop-call probability that calls to and from mobile units served by the sector will be dropped due to the interference from other sectors among the plurality of the sectors; and setting one or more radio parameters of the network responsively to the drop-call probability.

**10.** A method for configuring a wireless communication network (20), comprising:

receiving input data **characterizing** a plurality of sectors in the network; computing, based on the input data, a measure of quality of service in the network as a function of a frequency hopping characteristic of a transmitter (22) serving at least one of the sectors; and setting the frequency hopping characteristic of the transmitter responsively to the measure of quality.

**11.** The method according to claim 10, wherein the transmitter comprises one or more transmitter cards (30), and wherein setting the frequency hopping characteristic comprises determining a number of frequencies in a mobile allocation list (MAL) of the transmitter over which the transmitter cards are to hop.

**12.** Apparatus for configuring a wireless communication network (20), comprising an optimization workstation (28), which is adapted to receive input data **characterizing** a plurality of sectors in the network, and to compute, based on the input data, a measure of quality of service in the network as a function of a radio parameter that can be set by an operator of the network in order to determine an operating characteristic of a transmitter serving at least one of the sectors, other than a frequency allocation list of the at least one of the sectors, so as to determine an optimal setting of the radio parameter responsively to the measure of quality.

**13.** A computer software product for use in configuring a wireless communication network (20), the product comprising a computer-readable medium in which program instructions are stored, which instructions, when read by a computer (28), cause the computer to receive input data **characterizing** a plurality of sectors in the network, and to compute, based on the input data, a measure of quality of service in the network as a function of a radio parameter that can be set by an operator of the network in order to determine an operating characteristic of a transmitter serving at least one of the sectors, other than a frequency allocation list of the at least one of the sectors, so as to determine an optimal setting of the radio parameter responsively to the measure of quality.

FIG. 1

EP 1 351 534 A1

# FIG. 2

22

34

CONTROL/
INTERFACE

TRX    30

TRX

TRX

30

32

TO BSC/MSC

EP 1 351 534 A1

# FIG. 3

# FIG. 4

INPUT NETWORK PARAMETERS
FOR ALL BINS — 52

FIND PROBABILITIES OF TRANSMISSION
FOR ALL FREQUENCIES IN EACH SECTOR — 54

56 — DETERMINE QUALITY
DISTRIBUTION PER SECTOR

DETERMINE QUALITY DISTRIBUTION
PER BIN — 58

OUTPUT OVERALL QUALITY MEASURE — 59

# FIG. 5

SPLIT NETWORK INTO DISJOINT HSN GROUPS — 60

ANY HSN GROUP LEFT? — 62

NO → STOP

YES → SELECT HSN GROUP — 64

ANY SECTOR LEFT? — 66

NO ↑

YES → SELECT A SECTOR — 68

CALCULATE BASIC HISTOGRAMS FOR ALL SECTOR CO/ADJ TO MAL OF SELECTED SECTOR — 70

CALCULATE INTERFERENCE ON ALL FREQUENCIES OF MAL OF SELECTED SECTOR — 72

CALCULATE INTERFERENCE FROM CURRENT HSN TO BCCH — 74

HOPPING TCH — 76

YES → USE DYNAMIC MODEL FOR INTERFERENCE OF CURRENT HSN GROUP — 80

NO → CALCULATE TCH INTERFERENCE FROM ALL CURRENT HSN GROUP — 78

COMBINE ALL INTERFERENCE — 82

# FIG. 6

FIND PROBABILITY OF FRAME ERASURE DUE TO INTERFERENCE — 90

USE FRAME ERASURE RATE TO FIND CALL DROP PROBABILITY — 92

ESTIMATE EXPECTED NUMBER OF DROPPED CALLS PER SECTOR — 94

# FIG. 7

**European Patent Office**

## EUROPEAN SEARCH REPORT

Application Number

EP 03 25 2072

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 93 15569 A (COMARCO INC) 5 August 1993 (1993-08-05) <br><br> * page 8, line 22 - page 9, line 21 * <br> * page 27, line 10 - page 28, line 2 * <br> * page 38, line 13 - page 45, line 20 * <br> --- | 1-3, 8-10,12, 13 | H04Q7/36 |
| A | US 5 920 607 A (BERG MYRON) 6 July 1999 (1999-07-06) <br> * column 1, line 55 - column 2, line 13 * <br> * column 2, line 42 - column 8, line 30 * <br> ----- | 1-13 | |
| | | | TECHNICAL FIELDS SEARCHED (Int.Cl.7) <br><br> H04Q |

The present search report has been drawn up for all claims

| Place of search | Date of completion of the search | Examiner |
|---|---|---|
| THE HAGUE | 2 July 2003 | Pacholec, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 25 2072

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2003

| Patent document cited in search report | | Publication date | Patent family member(s) | Publication date |
|---|---|---|---|---|
| WO 9315569 | A | 05-08-1993 | WO 9315569 A1 | 05-08-1993 |
| US 5920607 | A | 06-07-1999 | WO 9724896 A2 | 10-07-1997 |

EPO FORM P0459

For more details about this annex : see Official Journal of the European Patent Office, No. 12/82